Europäisches Patentamt

European Patent Office

Office européen des brevets

(19)

(11) Veröffentlichungsnummer: **0 462 498 A2**

# (12) EUROPÄISCHE PATENTANMELDUNG

(21) Anmeldenummer: 91109628.7

(22) Anmeldetag: 12.06.91

(51) Int. Cl.⁵: **B23Q 1/16, B23Q 1/14**

(30) Priorität: 13.06.90 DE 9006628 U

(43) Veröffentlichungstag der Anmeldung:
27.12.91 Patentblatt 91/52

(84) Benannte Vertragsstaaten:
DE FR GB IT

(71) Anmelder: **LASCHET MASCHINENBAU GMBH & CO. KG**
**Hachestrasse 68**
**W-4300 Essen 1(DE)**

(72) Erfinder: **Der Erfinder hat auf seine Nennung verzichtet**

(74) Vertreter: **Sturies, Herbert**
**Patentanwälte Dr. Ing. Dipl. Phys. Herbert Sturies Dipl. Ing. Peter Eichler Postfach 20 12 42**
**W-5600 Wuppertal 2(DE)**

(54) **Werkzeugmaschine.**

(57) Werkzeugmaschine, mit einem Werkstückträger (11) und mit einem motorisch drehantreibbaren Werkzeugträger (12), der von einer die Positionierung des Werkzeugs (13) in Bezug auf das Werkstück (14) ermöglichenden Verstelleinrichtung (15) gehalten ist, die eine das Werkzeug um eine erste Schwenkachse (16) zu schwenken erlaubende erste Schwenkhalterung (17) hat, an der eine zweite, das Werkzeug um eine zweite, zu der ersten Schwenkachse (16) senkrechte Schwenkachse (18) zu schwenken erlaubende zweite Schwenkhalterung (19) befestigt ist, die den mit seiner Drehachse (20) durch den Schnittpunkt der beiden Schwenkachsen (16,18) verlaufenden Werkzeugträger (12) hält.

Um eine Werkzeugmaschine mit den eingangs genannten Merkmalen so zu verbessern, daß das Werkstück (14) insbesondere durch eine wesentliche Vergrößerung des Schwenkwinkels der zweiten Schwenkhalterung (19) mit großem Schwenkbereich bearbeitet werden kann, wird sie so ausgebildet, daß der Werkzeugträger (12) von der zweiten Schwenkhalterung (19) in allen Schwenkstellungen beider Schwenkhalterungen (17,19) mit seinem das Werkzeug (13) haltenden Ende (12') auf den Schnittpunkt (21) der beiden Schwenkachsen (16,18) gerichtet ist.

FIG. 1

Die Erfindung bezieht sich auf eine Werkzeugmaschine, mit einem Werkstückträger und mit einem motorisch drehantreibbaren Werkzeugträger, der von einer die Positionierung des Werkzeugs in Bezug auf das Werkstück ermöglichenden Verstelleinrichtung gehalten ist, die eine das Werkzeug um eine erste Schwenkachse zu schwenken erlaubende erste Schwenkhalterung hat, an der eine zweite, das Werkzeug um eine zweite, zu der ersten Schwenkachse senkrechte Schwenkachse zu schwenken erlaubende zweite Schwenkhalterung befestigt ist, die den mit seiner Drehachse durch den Schnittpunkt der beiden Schwenkachsen verlaufenden Werkzeugträger hält.

Eine Drehbank mit den vorgenannten Merkmalen ist aus der DE 34 24 494 A1 bekannt. Der Werkstückträger hat ein drehantreibbares Spannfutter für das Werkstück und ist horizontal in allen Richtungen verstellbar. Die erste Schwenkhalterung des Werkzeugträgers ist ein horizontal angeordneter Drehteller mit darauf befestigtem L-förmigem Winkelstück, dessen einer Winkelschenkel der Drehachse parallel angeordnet ist und die zweite Schwenkachse höhenverstellbar trägt. Die zweite Schwenkachse hält den Werkzeugträger derart, daß dessen Drehachse durch den Schnittpunkt der beiden Schwenkachsen verläuft, wobei der Werkzeugträger im Bereich zwischen der ersten Schwenkachse und dem Werkstückträger angeordnet ist und dort ein spanabhebendes Werkzeug aufweist. Mit Hilfe dieses Werkzeugs können bei rotierendem Werkzeugträger und gleichzeitig rotierendem Werkstückträger Mehrkante erzeugt werden, wenn die Drehzahlen von Werkstückträger und Werkzeugträger in einem entsprechenden Verhältnis zueinander stehen. Bei dieser bekannten Maschine ist die Relativverstellbarkeit zwischen Werkstück und Werkzeug im Ausmaß begrenzt. Es sind also nur vergleichsweise kleine für die Werkstückbearbeitung ausnutzbare Schwenkbewegungen möglich.

Demgegenüber liegt der Erfindung die Aufgabe zugrunde, eine Werkzeugmaschine mit den eingangs genannten Merkmalen so zu verbessern, daß das Werkstück insbesondere durch eine wesentliche Vergrößerung des Schwenkwinkels der zweiten Schwenkhalterung mit großem Schwenkbereich bearbeitet werden kann.

Diese Aufgabe wird dadurch gelöst, daß der Werkzeugträger von der zweiten Schwenkhalterung in allen Schwenkstellungen beider Schwenkhalterungen mit seinem das Werkzeug haltenden Ende auf den Schnittpunkt der beiden Schwenkachsen gerichtet ist.

Für die Erfindung ist von Bedeutung, daß der Werkzeugträger eine Position erhält, von der aus er bei allen Werkzeugstellungen auf ein Zentrum gerichtet ist, nämlich den Schnittpunkt der beiden Schwenkachsen. Infolgedessen kann das Werkstück bzw. dessen zu bearbeitender Bereich in diesem Zentrum bzw. im Schnittpunkt der beiden Schwenkachsen angeordnet und dort aus einer Vielzahl von Richtungen bearbeitet werden, die nur dadurch begrenzt ist, daß die Schwenkhalterungen aus konstruktiven Gründen nicht 360° Schwenkungen zulassen. Die Werkzeugmaschine ist daher im Einsatz sehr vielseitig und kann mit Werkzeugen für eine Vielzahl von Formgestaltungen durch spanabhebende Bearbeitung eingesetzt werden, also zum Bohren, Fräsen, insbesondere Wälzschlagbearbeiten, Drehen und Schleifen.

Wird die Werkzeugmaschine so ausgebildet, daß der Werkzeugträger aus dem zwischen dem Werkstückträger und der ersten Schwenkachse gelegenen Bereich in den vom Werkstückträger aus hinter der ersten Schwenkachse gelegenen Bereich schwenkbar ist, so liegt eine entsprechend vergrößerte Verschwenkbarkeit des Werkzeugs vor. Dabei kann erreicht werden, daß das Werkstück in der Richtung vom Werkstückträger weg durch Vorschub des Werkzeugs bearbeitet werden kann.

Eine konstruktiv vorteilhafte Ausgestaltung der Werkzeugmaschine ist gegeben, wenn die erste Schwenkhalterung ein Winkelstück ist, dessen erster Arm senkrecht und dessen zweiter Arm parallel zur ersten Schwenkachse angeordnet ist und wenn die zweite Schwenkhalterung direkt am zweiten Arm der ersten Schwenkhalterung schwenkbar befestigt ist. Die Ausbildung der ersten Schwenkhalterung als Winkelstück ist gegenüber der Ausbildung der bekannten ersten Schwenkhalterung als Drehteller mit darauf befindlichem, für eine Vertikalverstellung bestimmten Haltewinkel der zweiten Schwenkhalterung eine erhebliche bauliche Vereinfachung, insbesondere wenn die zweite Schwenkhalterung direkt am zweiten Arm der ersten Schwenkhalterung befestigt ist.

Des weiteren ist es vorteilhaft, daß die zweite Schwenkhalterung ebenfalls ein Winkelstück ist, dessen erster Arm in einer Parallelebene des zweiten Arms der ersten Schwenkhalterung angeordnet ist und dessen zweiter Arm parallel zur zweiten Schwenkachse angeordnet ist, und daß der Werkzeugträger mit seiner Drehachse senkrecht zum zweiten Arm der zweiten Schwenkhalterung angeordnet ist. Die Ausbildung der zweiten Schwenkhalterung als Winkelstück und dessen vorbeschriebene Anordnung an der ersten Schwenkhalterung erlaubt einen sehr großen Schwenkbereich, der praktisch nur durch die konstruktive Ausbildung der ersten Schwenkhalterung begrenzt ist, welche keine Schwenkung um 360° gestattet.Der Schwenkbereich des zweiten Winkelstücks und damit der Schwenkbereich des Werkzeugträgers kann insbesondere durch die Bemessung des zweiten Winkelstücks auf die Erfordernisse abgestimmt, d.h. vergrößert werden. Die Anordnung der Drehachse des Werkzeugträgers senkrecht zum zweiten Arm der zweiten Schwenkhalterung bewirkt eine Symmetrierung der Konstruktion, so daß die Schwenkbereiche der zweiten Schwenkhalterung in allen Schwenkrichtungen gleich groß sein können.

Eine symmetrische Ausgestaltung der Werkzeugmaschine läßt sich erreichen, wenn beide Schwenkhalterungen von einer Schwenkmittelstellung aus um mindestens 90° schwenkbar sind.

Um die Werkzeugmaschine zu automatisieren, ist sie so ausgestaltet, daß den Schwenkhalterungen jeweils ein Winkelgetriebe zugeordnet ist, deren erste Getriebeachse die jeweils zugehörige Schwenkachse bildet, und deren zweite, im Winkel zur ersten angeordnete Getriebeachse von einem Schwenkverstellmotor beaufschlagt ist. Die Winkelgetriebe sind beispielsweise Schneckengetriebe, deren Schneckenradachsen die vorerwähnten Getriebeachsen bilden.

Bei einer baulichen Ausgestaltung der Werkzeugmaschine sind beide Schwenkverstellmotoren an der ersten Schwenkhalterung befestigt. Infolgedessen ist die zweite Schwenkhalterung nicht durch einen ihre Stellung beeinflussenden Verstellmotor beaufschlagt, so daß sich dadurch keine Bewegungsbeschränkungen ergeben und die Belastung ihrer Lagerung an der ersten Schwenkhalterung entsprechend verringert ist.

Von weiterer Bedeutung ist es, daß die erste Schwenkhalterung auf einem Kreuzbewegungstisch angebracht ist. Mit Hilfe des Kreuzbewegungstisches kann die aus den Schwenkhalterungen bestehende Baugruppe in allen Richtungen einer Ebene verstellt werden, so daß der Positionierungsbereich des Werkstücks entsprechend vergrößert wird, ohne dazu das Werkstück bewegen zu müssen. Die Ausbildung des Kreuztisches und dessen Antriebe braucht lediglich auf die Ausbildung des Werkzeugträgers und der Schwenkhalterungen abgestimmt zu werden, insbesondere auf deren Gewicht und die erforderliche Verstellgeschwindigkeit. Es ist jedoch nicht erforderlich, die von Bearbeitungsfall zu Bearbeitungsfall wechselnde Belastung durch unterschiedliche Werkstücke zu berücksichtigen. Infolgedessen ist eine derart ausgebildete Werkzeugmaschine für Steuerungszwecke besonders geeignet.

Der Kreuzbewegungstisch ist zur Horizontalen geneigt angeordnet, was die seitliche Zugänglichkeit verbessert. Bewegungen des Kreuztischs in Neigungsrichtung sind mit entsprechenden Höhenverstellungen des Werkzeugträgers verbunden, so daß das Werkzeug bei einer Betätigung der Schwenkhalterungen eine durch die Neigung bedingte Verstell- oder Bewegungskomponente erhält, was den Einsatzbereich der Werkzeugmaschine entsprechend erweitert.

Sofern das Werkstück für die spanabhebende Bearbeitung rotiert, ist es vorteilhaft, die Werkzeugmaschine so auszubilden, daß der Kreuzbewegungstisch mit seiner einen Verstellachse parallel zu einer Rotationsachse des Werkstückträgers und mit seiner anderen Verstellachse senkrecht zu dieser Rotationsachse angeordnet ist, und daß die Neigungsebene des Kreuzbewegungstischs parallel zu der Rotationsachse des Werkstückträgers und mit einem Neigungswinkel von 35° angeordnet ist.

Die Erfindung wird anhand eines in der Zeichnung dargestellten Ausführungsbeispiels erläutert. Es zeigen:

Fig.1    eine perspektivische schematische Darstellung einer Werkzeugmaschine, und

Fig.2    bis 5 vergrößerte Darstellungen des Werkzeugträgers der Werkzeugmaschine der Fig.1 in verschiedenen Stellungen ihrer Schwenkhalterung.

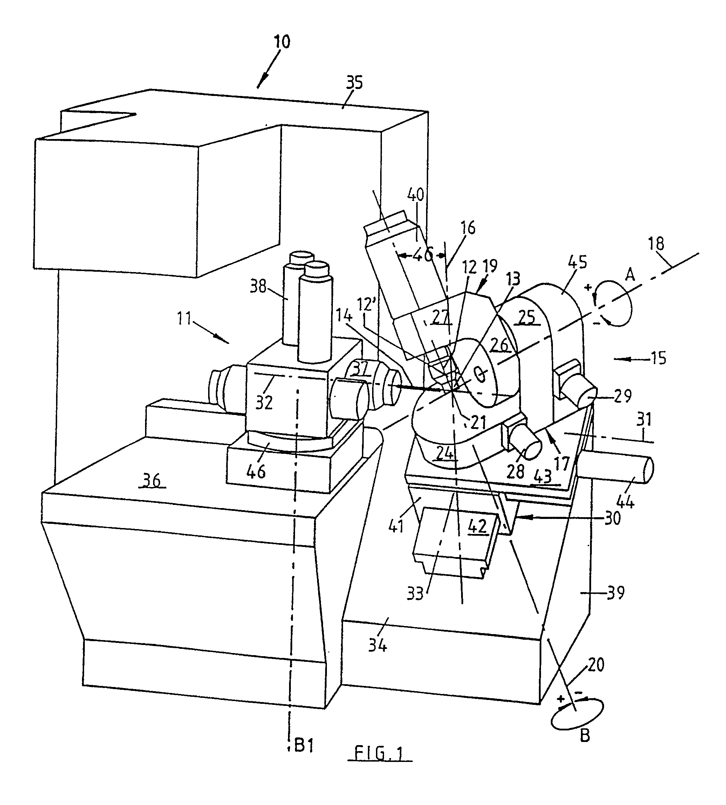

Die in Fig.1 schematisch dargestellte Werkzeugmaschine 10 hat ein schrankförmiges Gestell 35 mit einem Tisch 36 für einen Werkstückträger 11. Letzterer hat ein Spannfutter 37 zur Aufnahme eines schematisch als Strich dargestellten Werkstücks 14. Das Spannfutter 37 und damit das Werkstück 14 sind von einem Elektromotor 38 drehantreibbar.

Des weiteren hat die Werkzeugmaschine 10 einen Schrägtisch 39 mit einer unter 35° geneigten Neigungsebene 34, auf der eine Verstelleinrichtung 15 für einen Werkzeugträger 12 angeordnet ist. Der Werkzeugträger 12 ist hier ebenfalls ein Spannfutter mit einem Werkzeug 13, das zum Wälzschlagbearbeiten ausgebildet ist. Das Werkzeug 13 wird also rotiert und schlägt bei entsprechend dichter Anstellung an das Werkstück 14 in dessen Werkstoff. Dadurch werden der Formgebung des Werkzeugs entsprechend Nuten, Verzahnungen, Mehrkante od.dgl. im Werkstück 14 hergestellt, wobei dieses vorzugsweise rotiert, so daß das Werkzeug insgesamt nur einmal vorgeschoben zu werden braucht, wodurch sich die gewünschte erhebliche Herstellungsgeschwindigkeit ergibt. Es versteht sich jedoch, daß als Werkzeug auch jedes andere spanabhebende Werkzeug eingesetzt werden kann, welches zum Spanabheben rotierend angetrieben wird, beispielsweise ein herkömmlicher Spiralbohrer.

Das Werkzeug 13 bzw. der Werkzeugträger 12 wird von einem Elektromotor 40 angetrieben, der gleichachsig mit der Drehachse 20 des Werkzeugträgers 12 angeordnet ist. Der Elektromotor 40 wird von der Verstelleinrichtung 15 getragen.

Die Verstelleinrichtung 15 besteht zunächst aus einem Kreuztisch 30, der es also ermöglicht, ein von ihm abgestütztes Teil in allen Richtungen einer Ebene zu bewegen, indem dieses in den Richtungen der Verstellachse 31 und/oder in den Richtungen der Verstellachse 33 bewegt wird. Die Verstellachse 33 ist einer Zwischenplatte 41 zugeordnet, auf der in nicht dargestellter Weise auf der eine Tischfläche bildenden Neigungsebene 34 befestigten Bodenplatte 42 präzisionsgeführt ist. Die Zwischenplatte 41 trägt ihrerseits eine im rechten Winkel zu ihr längs der Verstellachse 31 verschieblich präzisionsgeführte Oberplatte 43. Wenn diese Oberplatte 43 längsverstellt wird, wozu beispielsweise ein Verstellmotor 44 dient, so verschiebt sich die Oberplatte parallel zur Rotationsachse 32 des Werkstücks 14. Bei einer Verstellung der Zwischenplatte 41 erfolgt eine Verstellung senkrecht zu der Rotationsachse 32 des Werkstücks 14. In letzterem Falle ist damit zugleich eine Höhenverstellung der Oberplatte 43 verbunden und damit eine entsprechende Höhenverstellung des von dieser Platte getragenen Aufbaus.

Der Tischaufbau des Kreuztischs 30 der Verstelleinrichtung 15 besteht im wesentlichen aus zwei Schwenkhalterungen 17,19, die jeweils als Winkelstück ausgebildet sind. Die Schwenkhalterung 17 ist mit ihrem ersten Arm 24 auf der Oberplatte 43 des Kreuztischs 30 angeordnet und um eine zugehörige Schwenkachse 16 um 360° schwenkbar. Der zweite Arm 25 der Schwenkhalterung 17 ist der Schwenkachse 16 parallel und trägt die Schwenkhalterung 19, die mit ihrem Arm 26 in einer dem Arm 25 parallelen Ebene angeordnet und um eine Schwenkachse 18 schwenkbeweglich ist. Die Schwenkbeweglichkeit dieser Schwenkhalterung 19 ist so groß, wie es die tatsächlich durchgeführte Ausbildung der Schwenkhalterung 17 zuläßt, die vom dargestellten schematischen abweicht. Der Arm 27 der Schwenkhalterung 19 trägt den Werkzeugträger 12 mit Werkzeug 13 und Antriebsmotor 40.

Die Anordnung der Schwenkhalterungen 17,19 ist so getroffen, daß ihre Achsen 16,18 einen Schnittpunkt 21 haben. Des weiteren ist die Anordnung so aufgebaut, daß die Drehachse 20 des Werkzeugträgers 12 durch diesen Schnittpunkt 21 verläuft. Eine wesentliche Besonderheit der Ausbildung der Werkzeugmaschine besteht nun darin, daß das freie Ende 12', welches also das Werkzeug 13 hält, auf diesen Schnittpunkt 21 gerichtet ist. Sein Abstand von diesem Schnittpunkt richtet sich nach den praktischen Erfordernissen, also beispielsweise nach der radialen Erstreckung des Werkstücks 14 und nach der Länge des Werkzeugs 13. Dementsprechend ist auch die Bemessung der Schwenkhalterungen 17,19 durchzuführen, also insbesondere die Länge des Arms 25 bzw. die diesbezügliche Anordnung der Schwenkachse 18, die Länge des Arms 26 und die Länge des Arms 27 bzw. die diesbezügliche Anordnung der Drehachse 20. Im Hinblick hierauf wird die Werkzeugmaschine bedarfsweise mit auswechselbaren Winkelstücken ausgerüstet werden können, um sie anforderungsgemäß zu verwenden.

Zum Schwenkverstellen der Schwenkhalterungen 17,19 sind Schwenkverstellmotoren 28,29 vorhanden, die auf in den Figuren nicht dargestellte Winkelgetriebe einwirken. Diese Winkelgetriebe sind beispielsweise Schneckengetriebe. Das nicht dargestellte Winkelgetriebe der ersten Schwenkhalterung 17 besteht beispielsweise aus einem ersten Schneckenrad mit einer in der Schwenkachse 16 angeordneten Drehachse und einem zweiten Schneckenrad mit einem in der Drehachse des Schwenkverstellmotors 28 angeordneten Achse. Wird das in der Schwenkachse 16 angeordnete Schneckenrad feststehend bzw. mit der Oberplatte 43 fest verbunden ausgebildet, so kann durch Antrieb des Schwenkverstellmotors 28 ein Verschwenken des Arms 24 erfolgen.

Ähnlich ist in der Schwenkachse 18 eine erste Getriebeachse angeordnet und drehfest mit dem Arm 26 verbunden. Der Arm 25 hat ein Getriebegehäuse 45, in dem ein Zahneingriff des der Schwenkachse 18 zugeordneten Getrieberades in ein von dem Motor 29 beaufschlagbares Getrieberad erfolgt. Der Drehantrieb dieses der Achse des Motors 29 zugeordneten Getrieberades bewirkt ein Verschwenken der Schwenkhalterung 19 um die Achse 18.

Die beiden Schwenkverstellmotoren 28,29 sind an der ersten Schwenkhalterung 17 befestigt, so daß die Schwenkhalterung 19 verstellmotorfrei und dementsprechend weit verschwenkbar und nicht belastet ist. Die Motoren 28,29 sind beispielsweise Schrittmotoren.

Anhand der Fig.2 bis 5 können die Möglichkeiten zur Schwenkverstellung des Werkzeugs 12 erläutert werden. Fig.2 bis 4 zeigen die zweite Schwenkhalterung 19 in derselben Relativlage vertikal zum Kreuzverstelltisch 30, nämlich senkrecht angeordnet, so daß also die Drehachse 20 des Werkzeugträgers 12 mit der Schwenkachse 16 des Arms 24 bzw. der Schwenkhalterung 17 zusammenfällt.

In den Fig.2 bis 4 ist jedoch der Schwenkarm 24 jeweils verstellt. In Fig.2 nimmt er eine Stellung ein, in der er parallel zur Verstellachse 33 der Bodenplatte 42 angeordnet ist. In Fig.3 nimmt er eine etwa um 35° geschwenkte Stellung ein, während er in Fig.4 um 90° gegenüber der Stellung in Fig.1 geschwenkt ist, so daß der Arm 24 also in die Richtung der Verstellachse 31 der Oberplatte 43 weist. Es versteht sich, daß der Arm in derselben, durch die Fig.2 bis 4 veranschaulichten Richtung mindestens um weitere 90° geschwenkt werden kann, bis seine Schwenkbeweglichkeit, die an sich 360° betrifft, durch das Maschinengestell 35 bzw. den Werkstückträger 11 begrenzt wird, wie sich aus Fig.1 ableiten läßt.

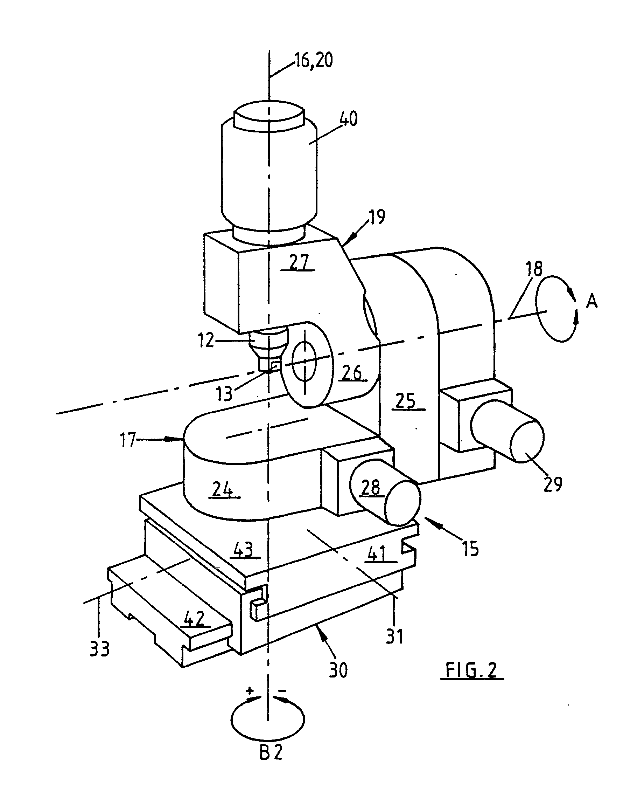

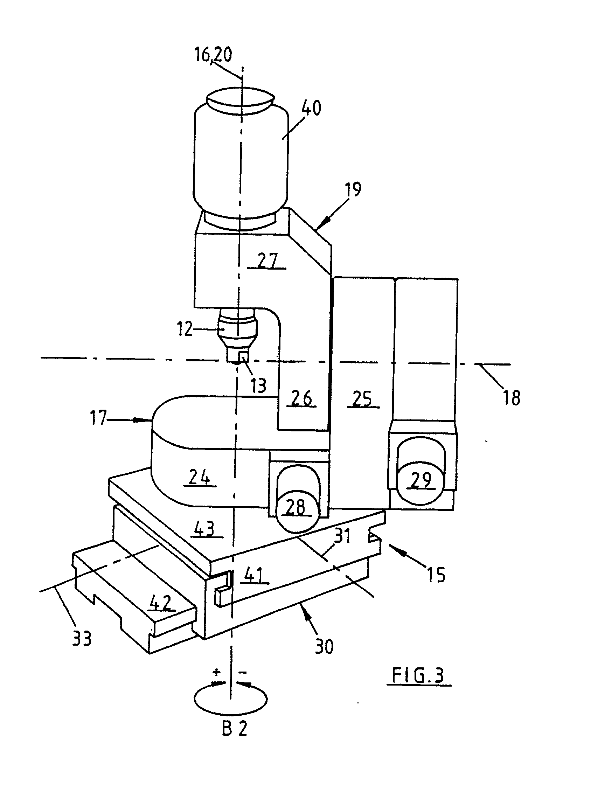

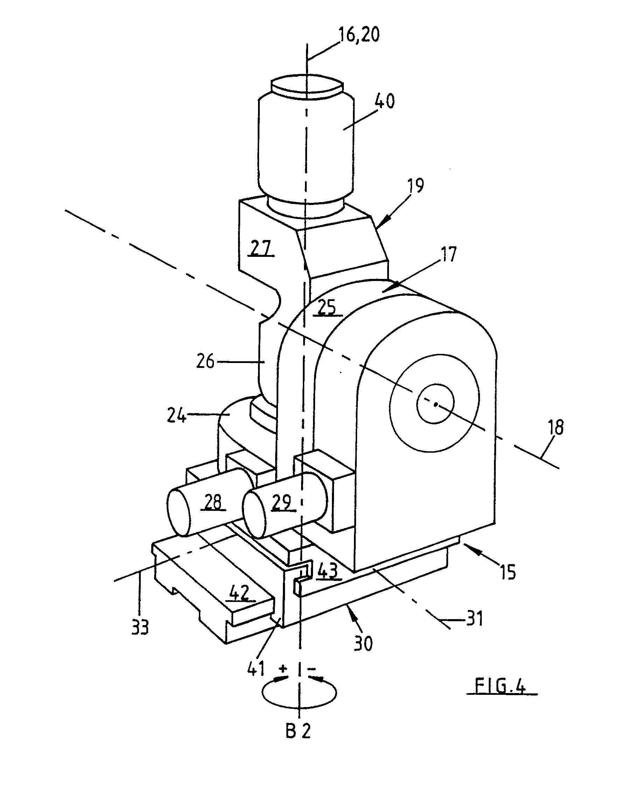

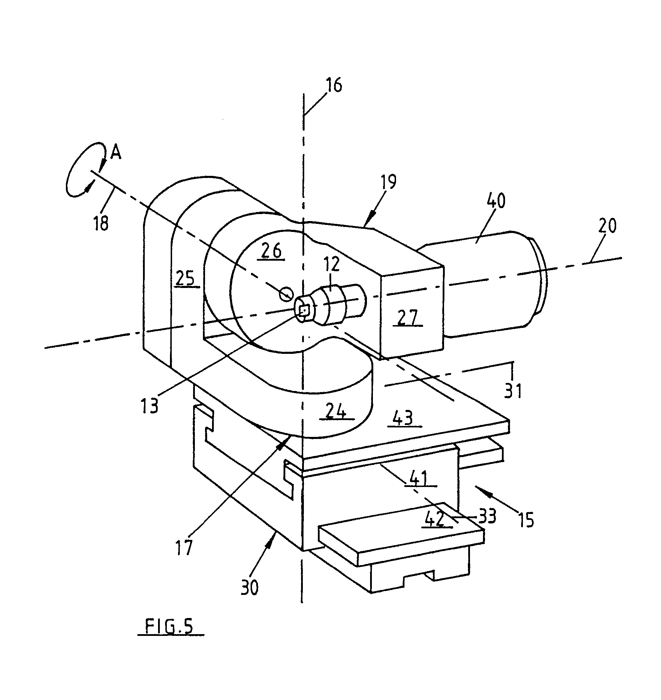

Die Schwenkbeweglichkeit des Arms 27 der Schwenkhalterung 19 und damit die Schwenkbeweglichkeit des Werkzeugträgers 12 ergibt sich durch Vergleich der Fig.1, mit z.B.Fig.2 und 5. In Fig.1 nimmt der Arm 24 der Schwenkhalterung 17 eine Stellung etwa gemäß Fig.3 ein. Die Schwenkhalterung 19 ist jedoch in Richtung auf den Werkstückträger 11 gekippt, so daß die Drehachse 20 des Werkzeugträgers 12 mit der Schwenkachse 16 einen Winkel 46 bildet. Da das Ende 12' des Werkzeugträgers 12 in Fig.1 oberhalb des Schnittpunkts 21 angeordnet ist, bewirkt die Schwenkung der Drehachse 20 gemäß Fig.1, daß sich der Werkzeugträger 12 in dem Bereich 22 zwischen dem Werkstückträger 11 und der ersten Schwenkachse 16 befindet. Aus dieser Stellung kann er über die Stellung der Fig.3 in eine in Fig.5 dargestellte Stellung geschwenkt werden. Fig.5 zeigt die Verstelleinrichtung 15 in einer Stellung gemäß Fig.2, wobei lediglich die Schwenkhalterung 19 in ihrer Stellung abweicht. Infolgedessen ist aus der Fig.5 ersichtlich, daß die Schwenkhalterung 19 in erheblichem Maße geschwenkt werden kann, nämlich bis die Drehachse 20 einen rechten Winkel mit der Schwenkachse 16 einschließt. Bei entsprechend konstruktiver Ausbildung ist eine Schwenkung darüber hinaus möglich. Wenn die Schwenkhalterung 17 eine Stellung gemäß Fig.4 einnimmt, bei der also der Arm 24 parallel zur Rotationsachse 32 gerichtet ist, wenn der Kreuztisch 30 gemäß Fig.1 angeordnet ist, kann die Schwenkhalterung 19 um mindestens 180° geschwenkt werden, also beispielsweise aus der in Fig.5 dargestellten Stellung auf der rechten Seite des Arms 24 in die horizontale Stellung links des Arms 24.

Aus den vorangehenden Darlegungen ist ableitbar, daß der Werkzeugträger 12 bzw. das Werkzeug 13 bei der beschriebenen Anordnung, also bei gegebenem Abstand vom Schnittpunkt 21 der Schwenkachsen 16,18 auf mehr als Viertelkugelflächen verschwenkt werden kann, deren Mittelpunkt der Schnittpunkt 21 ist. Je nach konstruktiver Ausbildung der Werkzeugmaschine läßt sich dieser erhebliche Verstellbereich wenigstens teilweise ausnutzen, um mit dem Werkzeug Werkstückbearbeitungen durchzuführen.

## Patentansprüche

1. Werkzeugmaschine, mit einem Werkstückträger (11) und mit einem motorisch drehantreibbaren Werkzeugträger (12), der von einer die Positionierung des Werkzeugs (13) in Bezug auf das Werkstück (14) ermöglichenden Verstelleinrichtung (15) gehalten ist, die eine das Werkzeug um eine erste Schwenkachse (16) zu schwenken erlaubende erste Schwenkhalterung (17) hat, an der eine zweite, das Werkzeug um eine zweite, zu der ersten Schwenkachse (16) senkrechte Schwenkachse (18) zu schwenken erlaubende zweite Schwenkhalterung (19) befestigt ist, die den mit seiner Drehachse (20) durch den Schnittpunkt der beiden Schwenkachsen (16,18) verlaufenden Werkzeugträger (12) hält, **dadurch gekennzeichnet**, daß der Werkzeugträger (12) von der zweiten Schwenkhalterung (19) in allen Schwenkstellungen beider Schwenkhalterungen (17,19) mit seinem das Werkzeug (13) haltenden Ende (12') auf den Schnittpunkt (21) der beiden Schwenkachsen (16,18) gerichtet ist.

2. Werkzeugmaschine nach Anspruch 1, **dadurch gekennzeichnet**, daß der Werkzeugträger (12) aus dem zwischen dem Werkstückträger (11) und der ersten Schwenkachse (16) gelegenen Bereich (22) in den vom Werkstückträger (11) aus hinter der ersten Schwenkachse (16) gelegenen Bereich (23) schwenkbar ist.

3. Werkzeugmaschine nach Anspruch 1 oder 2, **dadurch gekennzeichnet**, daß die erste Schwenkhalterung (17) ein Winkelstück ist, dessen erster Arm (24) senkrecht und dessen zweiter Arm (25) parallel zur ersten Schwenkachse (16) angeordnet ist und daß die zweite Schwenkhalterung (19) direkt am zweiten Arm (25) der ersten Schwenkhalterung (17) schwenkbar befestigt ist.

4. Werkzeugmaschine nach einem der Ansprüche 1 bis 3, **dadurch gekennzeichnet**, daß die zweite Schwenkhalterung (19) ebenfalls ein Winkelstück ist, dessen erster Arm (26) in einer Parallelebene des zweiten Arms (25) der ersten Schwenkhalterung (17) angeordnet ist und dessen zweiter Arm (27) parallel zur zweiten Schwenkachse (18) angeordnet ist, und daß der Werkzeugträger (12) mit seiner Drehachse (20) senkrecht zum zweiten Arm (27) der zweiten Schwenkhalterung (19) angeordnet ist.

5. Werkzeugmaschine nach einem der Ansprüche 1 bis 4, **dadurch gekennzeichnet**, daß beide Schwenkhalterungen (17,19) von einer Schwenkmittelstellung aus um mindestens 90° schwenkbar sind.

6. Werkzeugmaschine nach einem der Ansprüche 1 bis 5, **dadurch gekennzeichnet**, daß den Schwenkhalterungen (17,19) jeweils ein Winkelgetriebe zugeordnet ist, deren erste Getriebeachse die jeweils zugehörige Schwenkachse (16,18) bildet, und deren zweite, im Winkel zur ersten angeordnete Getriebeachse von einem Schwenkverstellmotor (28,29) beaufschlagt ist.

7. Werkzeugmaschine nach einem der Ansprüche 1 bis 6, **dadurch gekennzeichnet**, daß beide Schwenkverstellmotoren (28,29) an der der ersten Schwenkhalterung (17) befestigt sind.

8. Werkzeugmaschine nach einem der Ansprüche 1 bis 7, **dadurch gekennzeichnet**, daß die erste Schwenkhalterung (17) auf einem Kreuzbewegungstisch (30) angebracht ist,

9. Werkzeugmaschine nach einem der Ansprüche 1 bis 8, **dadurch gekennzeichnet**, daß der Kreuzbewegungstisch (30) zur Horizontalen geneigt angeordnet ist.

10. Werkzeugmaschine nach einem der Ansprüche 1 bis 9, **dadurch gekennzeichnet**, daß der Kreuzbewegungstisch (30) mit seiner einen Verstellachse (31) parallel zu einer Rotationsachse (32) des Werkstückträgers (11) und mit seiner anderen Verstellachse (33) senkrecht zu dieser Rotationsachse (32) angeordnet ist, und daß die Neigungsebene (34) des Kreuzbewegungstischs (30) parallel zu der Rotationsachse (32) des Werkstückträgers (11) und mit einem Neigungswinkel von 35$^\circ$ angeordnet ist.

FIG. 1

FIG. 2

FIG.3

FIG.4

FIG.5